# EUROPÄISCHE PATENTANMELDUNG

(11) **EP 4 517 131 A1**
(43) Veröffentlichungstag der Anmeldung: **05.03.2025**
(21) Anmeldenummer: 24197055.7
(22) Anmeldetag: 28.08.2024
(51) Int. Cl.: F16H 1/32

(54) **MULTI-EXZENTERGETRIEBE**

(30) Priorität: 04.09.2023 DE 102023003608; 31.05.2024 DE 202024102854 U
(71) Anmelder: Brehm, Bernhard, 75265 Calw-Stammheim (DE); Fetzner, Roland, 76646 Bruchsal (DE); Just, Manfred, 76709 Kronau (DE)
(72) Erfinder: BREHM, Bernhard, 75365 Calw-Stammheim (DE)
(74) Vertreter: Spachmann, Holger

(57) **Zusammenfassung**

Die Erfindung betrifft ein Hochleistungsgetriebe in Form eines Multi-Exzentergetriebes mit größtmöglicher Durchlassöffnung und geringsten Abmessungen, zur Steuerung von Anlagen verschiedenster technischer Bereiche auch in Robotik- Automatisierungs-Systemen, im 3D-Druck, beim Laser- und Plasmaschneiden, im Werkzeugmaschinenbau, in Handling- Systemen, standardisierten Pick & Place Systemen, im Schwerlastbereich und dazu gehörige Transportmittel. Es war Aufgabe ein kleines und kompaktes Hochleistungsgetriebe mit größtmöglicher zentraler Durchgangsöffnung, geringsten Abmessungen und Gewicht zu finden, das es gestattet möglichst viele Zähne eines Hohlrades mit denen der Antriebswelle des Getriebes gemeinsam in Eingriff zu bringen.

Es wird ein Multi-Exzentergetriebe (100, 102, 104) mit einer Aufreihung von zumindest zwei, winkelmäßig gleichverteilt versetzte und exzentrisch antreibbaren Zahnscheiben (2) mit vorbestimmbarer Drehmomentelastizität und mit modifizierter Evolventenverzahnung einer Stirnverzahnung (2.1) vorgeschlagen, die in eine Innenverzahnung (3.1) eines Hohlrads (3) als Abtriebswelle (3.1) eingreift, wodurch eine auf der Antriebsseite (20) erzeugte oszillierende Drehschwingung der Aufreihung der exzentrisch antreibbaren Zahnscheiben (2) eine Spielfreiheit des Multi-Exzentergetriebes (100, 102, 104) und eine Überlastfähigkeit mit einem maximierten Zahneingriff der Stirnverzahnung (2.1) der exzentrisch antreibbaren Zahnscheiben (2) in die Innenverzahnung (3.2) des Hohlrads (3) bereitstellt.

## Beschreibung

Die Erfindung betrifft ein als Multi-Exzentergetriebe ausgebildetes Hochleistungsgetriebe mit größtmöglicher Durchlassöffnung und geringsten Abmessungen, zur Steuerung von Anlagen verschiedenster technischer Bereiche auch in Robotik- Automatisierungs-Systemen, im 3D-Druck, beim Laser- und Plasmaschneiden, im Werkzeugmaschinenbau, in Handling- Systemen, standardisierten Pick & Place Systemen, im Schwerlastbereich und dazu gehörige Transportmittel, etc.

### Hintergrund der Erfindung

Es ist eine Vielzahl von Hochleistungsgetrieben bekannt. So offenbart die Offenlegungsschrift DE 25 28 466 A1 Getriebe mit einem Zahnrad bestehend aus zwei aufeinander liegenden Scheiben, die mit übereinstimmenden, im Ruhezustand gegeneinander winkelversetzen Verzahnungen versehen und elastisch gegeneinander zu verdrehen sind, so dass die Verzahnungen im Eingriffszustand bei im wesentlichen fluchtender Anordnung gegeneinander verspannt sind, dadurch gekennzeichnet, dass die Scheiben durch einen außermittig angeordneten axialen Zapfen in einer eine Federung in peripherer Richtung zulassenden Weise miteinander verbunden sind und die beiden Scheiben außermittig angeordnete Bohrungen aufweisen, die zur Bildung des federnden Zapfens mit einer gummielastischen Kunststoffmasse ausgegossen sind, zwischen den Scheiben eine Gleitschicht angeordnet ist die einen mit den Bohrungen fluchtenden Durchbruch aufweist, die beiden Scheiben auf einer Nabe sitzen, wobei die eine Scheibe fest mit der Nabe verbunden und die andere mit Spiel auf der Nabe gelagert ist. Dass die Nabe nach einer Seite hin zwei Ringschultern bildet, wobei die feste Scheibe zwischen einer Ringschulter mit kleinerem Durchmesser und einem gebördelten Nabenrand gehalten ist und die zweite Scheibe zwischen der Gleitschicht und der zweiten Ringschulter mit größerem Durchmesser sitzt und die Nabe anschließend an die Ringschulter mit größerem Durchmesser ein Ritzel bildet.

Nachteilig an dieser, in verschiedenen konstruktiven Varianten offenbarten Lösung ist es, dass eine Spannung zwischen den Scheiben durch einen federnden Zapfen erreicht wird, der zwischen den Scheiben einen Versatz der symmetrischen Verzahnung bewirkt, aber auch auf der Nabe einen Achsversatz der Scheiben zur Folge hat, was wiederum zu einem Spiel der Scheiben und deren Achsen, sowie auch bei der Verzahnung wieder zu einem Spiel führt.

In dem Gebrauchsmuster DE 1 888 004 U wird ein spielfreies Zahnrad beansprucht, dass durch eine, gleichachsig zu ihm angeordnete, ebenfalls in die Verzahnung des Gegenzahnrates eingreifende und mit Feder belastete Zahnscheibe formschlüssig an den Zahnflanken des Gegenzahnrades anliegend gehalten wird, dadurch gekennzeichnet, dass die Federn zur Belastung der Zahnscheibe aus längs geschlitzten Hülsen aus Federstahlblech bestehen, die in achsparallelen, sowohl das Zahnrad als auch die Zahnscheibe durchsetzenden Bohrungen angeordnet sind.

Bei dieser Lösung wird der Versatz der Verzahnungen des Zahnrades und der Zahnscheibe in einer Vorrichtung durch Verschiebung der Zahnscheibe in Umfangsrichtung erreicht, auf den Flansch aufgesetzt und in dieser Stellung des Zahnrades und der Zahnscheibe werden die Bohrungen auf dem Umfang des Zahnrades hergestellt und dann die Hülsen als Federn eingesetzt. Ein kompliziertes Herstellungsverfahren, das viele Faktoren beinhaltet, die wiederum zu einem schwer zu beeinflussenden Spiel zwischen der Verzahnung des Zahnrades und der Zahnscheibe führt.

Die deutsche Patentanmeldung 10 2020 006 332.2 sieht ein Exzentergetriebe mit einer spielfreien Verzahnung vor, bestehend aus Zahnscheibenpaaren, die auch zu einer Zahnwalze zu verbinden sind. Dabei sind die Zahnscheiben an ihrem äußeren Umfang mit einer Evolventen- Verzahnung mit radialer Vorspannung gebildet und die Zahnflanken der symmetrischen Evolventen- Verzahnung mehrerer Zahnscheibenpaare direkt gegen die Zahnflanken der Evolventen- Verzahnung eines Gegenzahnrades zu wälzen.

Der Nachteil dieses Standes der Technik besteht darin, dass die Zahnradpaare mit Evolventen- Verzahnung auf einer Hohlwelle lagern, wodurch die Anzahl der Zähne der Evolventen- Verzahnung in dem jeweiligen Gegenzahnrad nicht gleichzeitig im Eingriff übertragbar ist und wodurch die Tragfähigkeit des Getriebes eingeschränkt ist und ein schlechterer Wirkungsrad erreicht wird. Außerdem ist die Konstruktion der Zahnradpaare und deren Verspannung sehr aufwendig und somit teuer.

Daneben betrifft die US 2003/0224893 A1 ein Innenzahnrad-Planetengetriebe mit vier bzw. sechs exzentrisch betreibbaren Zahnscheiben, die auf einer Exzenter-Hohlwelle benachbart angeordnet sind, und mittels Stützwellen in einer exzentrischen Drehschwingung gelagert sind. Die benachbarten Zahnscheiben sind in ihrer Exzentrizität um jeweils 180° versetzt und weisen eine Zykloid-Stirnverzahnung (Trochoide-Verzahnung) auf, die in eine innere Nadelrollenverzahnung eines Hohlrads eingreift. Nachteilig ist zum einen, dass die Zähne des Hohlrades nicht axial gleichmäßig verteilt im Eingriff mit der Stirnverzahnung der Zahnscheiben steht, so dass keine drehelastische axiale Wirkung eine Überlastfähigkeit begünstigen kann. Des Weiteren ist die trochiale Zahnform für eine Überlastfähigkeit ungeeignet, da diese Zahnform für eine elastische Verformung ungeeignet ist. Da der Eingriffswinkel mit geringerem Zähnezahlverhältniss grösser wird, müssen Kopfkreisdurchmesser und Fußkreisdurchmesser verändert werden, um einen vernünftigen Überdeckungsgrad zu erhalten. Dies gelingt allerdings nur bei einer Evolventenverzahnung, da dort ein Achsabstandsmaß ausgleichbar und fertigungstechnisch problemlos herstellbar ist.

Bei der in dieser und anderen Druckschriften vorgeschlagene trochiale Zykloidverzahnung, die in eine Nadelrollenverzahnung des Hohlrads eingreift, sind steife, starre Zahnräder zwingend notwendig, die keine Verformung und somit keine überlastfähige Elastizität zulassen. Eine Zykloidverzahnungsgeometrie lässt nämlich keinerlei Änderungen (Fertigungstoleranzen, thermische Maßänderungen, Exzentertoleranzen und Lagertoleranzen) zu. Die Verzahnung muss sehr steif ausgeführt werden, um überhaupt ordnungsgemäß zu funktionieren. Sie besitzt weder ein Kopf- noch Fußspiel, was bedeutet, dass ein absolut formschlüssiges Ablaufen der Verzahnung gegeben sein muss. Deshalb ist eine Elastizität der Zahnräder auszuschließen. Ein Überlastfall führt dies zur Schädigung des Getriebes, Ungenauigkeit in der Fertigung oder variierende Belastung führen zu einem schlechten Wirkungsgrad, erhöhter Geräuschbildung sowie Ausfall des Getriebes.

Außerdem betrifft die DE 10 2016 107 444 A1 ein Getriebe mit zwei bzw. acht winkelversetzten, exzentrisch betreibbaren Zahnscheiben, die eine Bogenverzahnung (abgerundete Verzahnung), d.h. ebenfalls eine zykloide Verzahnung der Zahnscheiben und der Hohlrad-Innenverzahnung aufweisen. Eine Drehmoment-Elastizität der Zahnscheiben ist ebenfalls unerwünscht. Es ergeben sich dieselben Nachteile, wie bei der US 2003/0224893 A1. Auch werden Exzenter-Stützwellen passiv über einen Antrieb der zentralen Antriebshohlwelle mit angetrieben, dies gelingt allerdings nur bei starren Zahnscheiben, die keinerlei Drehmomentelastizität zulassen. Bei einer Totstellung, in einem Überlastfall oder bei Elastizität der Zahnscheiben blockieren sich Exzenter-Stützwelle und zentrale Hohlwelle gegenseitig. Insoweit ist das dort beschriebene Getriebe weder für einen Überlastfall, noch bei Drehmomentelastizität im An- oder Abstriebsstrang geeignet. Dadurch, dass die exzentrische Stützwellen passiv mitbewegt, d.h. nicht angetrieben werden, kann, wie durch Simulationen zeigbar, beim Totpunkt des Getriebes eine mechanische Sperre auftreten, so dass das Getriebe leicht blockiert.

Aus der DE 10 2004 037 939 und der DE 28 08 030A1 A gehen ein Einfach-Getriebezahnrad mit grundsätzlich zykloider Verzahnung und eingeschnittenen bzw. verjüngten Zähnen hervor, deren Schwächung bzw. Verjüngung eine verminderte Kraftübertragung und reduzierte bzw. nicht vorhandener Überlastfähigkeit aufweist.

Es ist deshalb Aufgabe der Erfindung, ein kleines und kompaktes Hochleistungsgetriebe mit größtmöglicher zentraler Durchgangsöffnung, geringsten Abmessungen und Gewicht zu finden, das es gestattet, möglichst viele Zähne eines Hohlrades mit denen der Antriebswelle des Getriebes im Überlastfall gemeinsam in Eingriff zu bringen, um die vorhandene Exzentrizität und den verschobenen Massenschwerpunkt auszugleichen und die Kräfte am äußeren Umfang der Zahnritzel sowie eine nach Möglichkeit ununterbrochene Kraftübertragung in allen radialen Richtungen abzugeben.

### Offenbarung der Erfindung

Die Aufgabe wird mit den Merkmalen des Anspruchs 1 und der weiteren unabhängigen Ansprüche gelöst, indem das erfindungsgemäße Multi-Exzentergetriebe mit einem, eine Antriebswelle lagerndes Motorgehäuseteil einer Antriebsseite und einem, eine Abtriebswelle lagerndes Getriebegehäuseteil einer Abtriebsseite, die miteinander verbunden sind und ein Gehäuse des Multi-Exzentergetriebes bereitstellen, aufweist. An der Antriebsseite ist eine Aufreihung von zumindest zwei oder mehr, bevorzugt sechs, entlang einer zentralen Achse angeordnete, am äußeren Umfang eine Stirnverzahnung aufweisende exzentrisch antreibbare Zahnscheiben angeordnet, die mit der Antriebswelle zur Erzeugung einer exzentrischen Drehschwingung gekoppelt sind. An der Abtriebsseite ist ein innenverzahntes Hohlrad angeordnet, wobei das Hohlrad am äußeren Umfang der Aufreihung der exzentrisch antreibbaren Zahnscheiben an dem Getriebegehäuseteil und/oder an dem Motorgehäuseteil durch ein Lager drehbar gelagert ist, und mit der Abtriebswelle drehfest verbunden ist, und eine Innenverzahnung aufweist, in der die Stirnverzahnung jeder exzentrisch antreibbaren Zahnscheiben bereichsweise eingreift. Hierzu sind in den Kreisflächen der exzentrisch antreibbaren Zahnscheiben zumindest zwei, umfangsmäßig um einen Mittelpunkt der Kreisflächen gleichverteilt angeordnete Durchgangsöffnungen umfasst, so dass die Durchgangsöffnungen der Aufreihung der exzentrisch antreibbaren Zahnscheiben von Exzenter-Stützwellen durchsetzt sind. Vorzugsweise sind die Exzenter-Stützwellen in einer inneren Stirnfläche des Motorgehäuses drehbar, gelagert. Die exzentrisch antreibbaren Zahnscheiben sind als Stirnrad-Zahnscheiben ausgeformt und sind drehschwingbar gelagert.

Erfindungsgemäß wird vorgeschlagen, dass die Stirnverzahnung Zahnflanken entlang eines Umfangs der Kreisfläche der jeweiligen exzentrisch antreibbaren Zahnscheibe aufweist, wobei die Zahnflanken eine modifizierte Evolventenverzahnung bereitstellen.

Des Weiteren weisen die Kreisflächen der exzentrisch antreibbaren Zahnscheiben eine vorbestimmbare Drehmomentelastizität, insbesondere durch Variation von Materialwahl, Materialdicke und/oder geometrischen Strukturen auf. So kann die Dicke der Zahnscheiben zwischen 12 bis 15 mm betragen, allerdings je nach spezifischen Antriebsaufgaben und Materialwahl auch deutlich dicker oder dünner sein.

Des Weiteren erfolgt die Aufreihung der exzentrisch antreibbaren Zahnscheiben axial benachbart derart zueinander, dass jeweils benachbarte exzentrisch antreibbare Zahnscheiben einen umfangsmäßig gleichverteilt versetzten minimalen Exzenterversatz, insbesondere sechs exzentrisch antreibbare Zahnscheiben ein um jeweils 60° versetzten Exzenterversatz, aufweist,

Somit bildet eine auf der Antriebsseite erzeugte oszillierende Drehschwingung der Aufreihung der exzentrisch antreibbaren Zahnscheiben eine Spielfreiheit des Multi-Exzentergetriebes aus, und das Hochleistungsgetriebe stellt eine Überlastfähigkeit mit einem maximierten Zahneingriff, insbesondere einen 100-prozentigen Zahneingriff, bei minimierter Zahnkraft der Stirnverzahnung der exzentrisch antreibbaren Zahnscheiben in der Innenverzahnung des Hohlrads bereit.

Die Zahnscheiben sind in der Regel kreisförmig ausgebildet und werden zu einer exzentrischen Drehschwingung angeregt, d.h. jeder Punkt auf der Zahnscheibe durchläuft während der Drehschwingung eine Kreisbahn, die einen wesentlich kleineren, zumindest 10%, bevorzugt zumindest 5% kleineren, Durchmesser als der Durchmesser der Zahnscheibe beträgt. In der Regel ist der Durchmesser Kreisbahn so klein wie möglich, insbesondere 2% der weniger des Durchmessers der Zahnscheibe, gerade soviel, dass in einem hohen Umfangsbereich die Zähne von Hohlrad und Stirnverzahnung der Zahnscheiben nicht im Eingriff stehen, denn die ergibt eine sehr hohe Untersetzungen. Falls niedrigere Untersetzungen bereitzustellen sind, können die Durchmesser wahlweise auch größer sein.Insoweit dreht sich die Zahnscheibe nicht, sondern oszilliert mit relativ kleiner Amplitude um Ihren Mittelpunkt.

Ein wesentliches Merkmal des erfindungsgemäßen Multi-Exzentergetriebes ist eine Drehmomentelastizität, die insbesondere durch drehmomentelastische, insbesondere federnde exzentrisch antreibbare Zahnscheiben, aber auch durch eine erhöhte Drehmomentelastizität des Abtriebs, insbesondere des Hohlrads mit Innenverzahnung und des Antriebs, insbesondere der Antriebswelle, im Speziellen der Hohlwelle und/oder der Exzenter-Stützwellen erreichbar ist. Durch eine Verspannung der mit minimierten Winkelversatz aneinander gereihten Zahnscheiben in der Hohlradverzahnung wird eine Spielfreiheit erreicht, die für hochpräzise Antriebsaufgaben unerlässlich ist. Durch die Drehmomentelastizität wird eine erhöhte Überlastfähigkeit erreicht, und die modifizierte Evolventenverzahnung sorgt dabei für einen verbesserten Wiirkungsgrad. Die Drehmomentelastizitität kann beispielsweise durch eine entsprechende Materialauswahl, durch eine Formgebung und geometrische Strukturen, z.B. spiralartige Einschnitte, Ausnehmungen, Eindünnungen erreicht werden. So haben bestimmte Materialien wie weiche Metalle oder Kunststoffe ein elastisch-nachgiebiges Verhalten, wobei ein hohes Rückverformungsvermögen erforderlich ist. Naturgemäß senkt eine höhere Anzahl von gegenseitig winkelversetzten Zahnscheiben den Gesamtwirkungsgrad des Getriebes, erhöht aber den Anteil des Zahneingriffs ins Hohlrad. Es hat sich gezeigt, dass bei sechs um jeweils 60° (360°/6) versetzte Zahnscheiben eine 100%-tiger Zahneingriff im Leerlauf erreichbar ist, wobei sich bei erhöhter Last aufgrund der Elastizität der Zahnscheiben der Zahneingriff deutlich erhöht und eine verbesserte Kraftübertragung bei reduzierter Kraftbelastung auf einzelne Zähne bietet. So erreicht man bei zwei Zahnscheiben ca. 50% Zahneingriff bei einem Wirkungsgrad von 92%, bei sechs Zahnscheiben einen 100% Zahneingriff bei einem Wirkungsgrad von 70%.

Somit wird durch die Erfindung vorgeschlagen, durch Variation der evolventen Zahnform und durch drehmomentelastische Eigenschaften der Baugruppen Zahnrad, Hohlrad und Antriebswelle einen verbesserten Wirkungsgrad, eine erhöhte Überlastfähigkeit und eine Spielfreiheit eines Multi-Exzentergetriebes mit hohem Übersetzungsverhältnis zu erreichen.

Das Übersetzungsverhältnis des Multi-Exzentergetriebes ergibt sich in der Regel aus dem Quotienten aus der Zähnezahl der Innenverzahnung des Hohlrads zur Differenz der Zähnezahlen zwischen Hohlrad und Stirnverzahnung der Zahnscheiben.

Durch einen erhöhten, insbesondere 100-prozentigen Zahneingriff erhöht sich gegenüber einer konventionellen Getriebetechnik die Nennbelastbarkeit deutlich, aber die Überlastfähigkeit steigt trotzdem zusätzlich noch weiter nach oben an. Eine Spielfreiheit kann nur durch Verspannen der Verzahnung hergestellt werden. Dies kann beispielsweise geometrisch wie durch Schlitze zwischen den Zähnen erreicht werden. Wenn beispielsweise Durchgangsöffnungen für die Exzenter-Stützwellen geringfügig um einige Winkelminuten versetzt eingebracht werden und die Zahnscheiben zueinander versetzt verbaut werden, entsteht eine Vorspannung des kompletten Getriebes mit sehr einfachen Mitteln. Dabei fällt der Wirkungsgrad geringfügig geringer aus, da eine weitere Vorspannkraft eine zusätzliche Energie erfordert.

Im Rahmen der Erfindung ist eine Nennbelastbarkeit definiert als eine dauernde Belastung, die bei einer bestimmten Lastgröße (N, Nm, Watt) in einer bestimmten Zeit (Lebensdauer im allg. Maschinenbau 20.000 h) allen dynamisch beanspruchten Teile (Lager, Zähne, etc.) eine funktionsfähige Arbeit garantiert.

Eine Überlastfähigkeit ist in diesem Zusammenhang definiert als eine kurzfristige Belastung, die wenige Sekunden das Mehrfache der Nennbelastung aushalten kann, ohne die Streckgrenze der beanspruchten Teile zu überschreiten, so dass kein Schaden an den dynamisch beanspruchten Teilen auftritt.

In einer vorteilhaften Ausführungsform kann auf der Antriebsseite als Antriebsachse eine, die Aufreihung der exzentrisch antreibbaren Zahnscheibe tragende, Welle, insbesondere Hohlwelle, mit einem Innendurchmesser, und vorzugsweise einer Außenverzahnung, umfasst sein, wobei die Welle, insbesondere Hohlwelle, an einem Motorgehäuseteil-seitigem axialen Ende über ein Lager in dem Motorgehäuseteil drehbar lagert, und vorzugsweise an einem Getriebegehäuseteil-seitigen axialen Ende über ein Lager die Aufreihung der exzentrisch antreibbare Zahnscheiben auf der Welle, insbesondere Hohlwelle abschließt und in einer Hohlaufnahme einer Abtriebswelle des Hohlrades drehbar lagert.

In einer von der vorhergehenden Ausführungsform ausgehenden weiteren vorteilhaften Ausführungsform kann jede exzentrisch antreibbare Zahnscheibe einen kreisförmigen Umfang und eine zentrische innere Nabenaufnahme aufweisen, in der über ein Lager eine Exzenternabe frei drehbar in der exzentrisch antreibbaren Zahnscheibe angeordnet ist, wobei vorzugsweise die Exzenternabe ein radial innenliegende Innenverzahnung aufweist, die in eine Außenverzahnung der Welle, insbesondere Hohlwelle, eingreift, so dass eine Drehung der Welle, insbesondere Hohlwelle, eine Drehung der Exzenternabe bewirkt, die wiederum eine exzentrische Drehschwingung der exzentrisch antreibbaren Zahnscheibe bewirkt.

In einer auf den vorhergehenden Ausführungsformen basierenden weiteren besonderen Ausführungsform ist das Hochleistungsgetriebe als Multi-Exzentergetriebe mit einer zu modifizierenden Zahnform ausgebildet, dessen Nabe als Antriebsrad eine Hohlwelle mit großem Innendurchmesser und einer Außenverzahnung ist, auf deren äußeren Umfang ein Hohlrad mit einer, einerseits mittig angeformten hohlen Abtriebswelle und andererseits einer Innenverzahnung lagert, an das sich zumindest zwei um den Umfang gleichverteilt versetzte, insbesondere sechs, um jeweils 60° versetztem exzentrisch antreibbaren-Zahnscheiben, auch mehr oder weniger exzentrisch antreibbaren- Zahnscheiben mit einer, bezogen auf den äußeren Kreisumfang von 360°, um jeweils geringeren angepassten Versetzung anschließen, in deren inneren Kreisumfang jeweils eine Exzenternabe mit einer Innenverzahnung und darauf ein Lager angeordnet sind, die exzentrisch antreibbaren Zahnscheiben eine Stirnverzahnung mit Zahnflanken, Kreisflächen, Durchgangsöffnungen und den inneren Kreisumfang aufweisen, die durch die Exzenternaben zueinander versetzt zur Mittelachse des Hochleistungsgetriebes zu regulieren sind, wobei auf der Außenfläche der, am Hohlrad angeformten, hohlen Abtriebswelle ein Wälzlager angeordnet ist, das mit der Abtriebswelle mittig in einem Getriebegehäuse lagert, die Außenverzahnung auf der Hohlwelle in die Innenverzahnung der Exzenternaben und die Stirnverzahnung der exzentrisch antreibbaren- Zahnscheiben in die Innenverzahnung des Hohlrades eingreifen, ein Wälzlager am Ende der Hohlwelle die Aufreihung abschließt und über einen weiteres Wälzlager in einem Motorgehäuse lagert, die innere Stirnfläche des Motorgehäuses mit, zum Hohlrad ragenden, drehbar gelagerten Drehmomenten- Stützwellen ausgestattet ist, welche die Durchgangsöffnungen in den Kreisflächen der exzentrisch antreibbaren- Zahnscheiben durchdringen und in diesen versetzt drehbar lagern, über ein weiteres Wälzlager des Getriebegehäuses und des Motorgehäuses miteinander zu verbinden sind und der Motor einer Anwendung auf der Hohlwelle direkt mit dem Hochleistungsgetriebe zu koppeln ist und mit dem Versatz der, am äußeren Umfang der exzentrisch antreibbaren Zahnscheiben, angeordneten Stirnverzahnung mit Zahnflanken an den exzentrisch antreibbaren Zahnscheiben durch deren oszillierende Drehbewegung ein gleichzeitiger 100- prozentiger Zahneigriff mit optimaler Zahnkraft in die Innenverzahnung des Hohlrads zu erreichen ist.

Somit schlägt diese Ausführungsform ein Multi-Exzentergetriebe mit modifizierter Zahnform vor, dessen Nabe als Antriebsrad eine Hohlwelle mit großem Innendurchmesser und einer Außenverzahnung ist, auf der ein Hohlrad mit Abtriebswelle und Innenverzahnung lagert, der sechs, um jeweils 60° versetzte exzentrisch antreibbaren Zahnscheiben folgen, in deren inneren Umfang jeweils eine Exzenternabe mit einer Innenverzahnung und darauf ein Lager angeordnet sind, die einerseits mit der Abtriebswelle mittig in einem Getriebegehäuse und andererseits in einem Motorgehäuse lagert.

Alternativ oder zusätzlich zum vorgenannten Antrieb mittels einer zentralen Welle kann auf der Antriebsseite als Antriebsachse oder als zusätzliche Antriebsache die Exzenter-Stützwellen jeweiligen exzentrisch antreibbaren Zahnscheiben zugeordnete Exzenterabschnitte aufweisen und über ein Antriebs-Verteilergetriebe durch die Antriebswelle antreibbar sind, um eine exzentrische Drehschwingung der exzentrisch antreibbaren Zahnscheiben zu bewirken. In dieser Ausführungsform kann eine Drehschwingung der Zahnscheiben durch die Exzenter-Stützwellen erfolgen. Damit diese, zumindest zwei Exzenter-Stützwellen, ähnlich wie Exzenter-Pleuelstangen, rotatorisch mittels eines zentralen Drehantrieb angetrieben werden können, kann ein Verteilergetriebe, beispielsweise ein Stirnradgetriebe, umfasst sein, der eine Rotation einer zentralen Antriebsdrehachse auf verteilte synchrone Drehbewegungen der Exzenter-Stützwellen umsetzen kann. Die Exzenterabschnitte sind in den Durchgangsöffnungen der Zahnscheiben mittels Exzenterabschnitten und ggf. einem Lager gelagert, wobei eine Rotation der Exzenter-Stützwelle eine exzentrischen Drehschwingung der Zahnscheibe bewirkt.

Besonders hervorzuheben ist die erfindungsgemäße Konstruktion dahingehend, dass vergleichsweise dünne Zahnscheiben mit am äußeren Umfang kleinen Zähnen einsetzbar sind und einer Kreisfläche mit einem großen inneren Kreisumfang zu erzeugen ist, indem Exzenternaben mit Innenverzahnung und Lagern anzuordnen sind, die eine exzentrische, oszillierende Kreisbewegung der dünnen Zahnscheiben um die Hohlwelle und somit auf die Antriebswelle gestatten. Die ebenfalls in den Kreisflächen angeordneten Durchgangsöffnungen gestatten darüber hinaus, dass die drehbaren Drehmomenten-Stützwellen am Motorgehäuseteil diese durchdringen und mit dem gegenüberliegenden Getriebegehäuseteil drehbar verbunden werden können, wodurch trotz der exzentrischen, oszillierenden Drehbewegung der exzentrisch antreibbaren Zahnscheiben eine stabile Lagerung und Drehbewegung des Getriebes erreicht werden kann. Außerdem werden durch die stabile Drehbewegung trotz des Versatzes, der am äußeren Umfang der Zahnscheiben angeordneten Verzahnung ein optimaler gleichzeitiger Zahneingriff in die Innenverzahnung des Hohlrads erreicht. Schließlich wird durch die fast lückenlose Verzahnung eine optimaler radiale Zahnkraft abgegeben, die engmaschig und vektorartig in alle radialen Richtungen verläuft und die einen hohen Wirkungskrad des Hochleistungsgetriebes gewährleistet.

In einer vorteilhaften Ausführungsform können die Durchgangsöffnungen in den Kreisflächen der exzentrisch antreibbaren- Zahnscheiben durch Einbringen geometrischer Strukturen, wie radialer Spalte, zwischen den Zähnen der Stirnverzahnung, in die exzentrisch antreibbaren Zahnscheiben beweglich verdreht angeordnet sein, und eine Elastizität, und insbesondere eine federnde Wirkung in den exzentrisch antreibbaren Zahnscheiben kann erreichbar sein und die Zähne der Stirnverzahnung an den exzentrisch antreibbaren Zahnscheiben zur Innenverzahnung des Hohlrades können gegenseitig verspannt sein, und eine spielfreie Verzahnung des Hochleistungsgetriebes kann erreicht sein. Dieser bei bestimmten Anwendungsformen alternativ zu nutzende konstruktive Aufbau gewährleistet nicht nur eine spielfreie Verzahnung, sondern auch eine hohe Präzision und einen hohen Wirkungsgrad beim Einsatz des Hochleistungsgetriebes.

In einer vorteilhaften Ausführungsform kann eine Drehmomentelastizität der Exzenter-Zahnscheiben durch Bereitstellung geometrischer Strukturen, wie Ausnehmungen, Vertiefungen, Einschnitte in die Kreisflächen und/oder Spalte zwischen den Zähnen der Stirnverzahnung erreicht werden, Somit wird durch die geometrischen Strukturen eine drehmoment-federelastische Wirkung der Zahnscheiben unterstützt, so dass sich diese insbesondere im Überlastfall, in die Innenverzahnung des Hohlrads elastisch verspannen können.

In einer vorteilhaften Ausführungsform können die Zähne der Stirnverzahnung der winkelversetzten exzentrisch antreibbaren Zahnscheiben zur Innenverzahnung des Hohlrades gegenseitig verspannt sein, um die Spielfreiheit des Multi-Exzentergetriebe bereitzustellen. Dies kann beispielsweise durch eine geringfügige Winkelvariation bei der Drehwinkelversetzung der Zahnscheiben erreicht werden, oder in einer geringfügigen Abweichung der Zahnabstände von Zahnscheiben zur Innenverzahnung des Hohlrades.

Hervorzuheben ist, dass die exzentrisch antreibbaren Zahnscheiben an ihrem äußeren Umfang mit modifizierbaren alternativen Zahnformen, wie modifizierte Evolvente, verkürzte Zykloide mit einem Außenrad als Kurvenscheibe oder mit Nadelrollen, ausführbar sind. Diese haben den Vorteil, dass die Zähne kurz und eng auszuführen sind, wodurch trotz kleiner Größen eine extrem hohe Tragfähigkeit der Stirnverzahnungen, wenig Material und Gewicht und damit auch eine hohe Wirtschaftlichkeit erreicht werden kann. Hierzu kann in einer vorteilhaften Ausführungsform die Stirnverzahnung der Zahnflanken eine vordefinierbare Zahnform zur verbesserten Drehmomentübertragung der Drehschwingung mit einer modifizierten Evolvente mit vergrößertem Eingriffswinkel, vergrößerter Kopfrücknahme, verkleinerter Fußrücknahme und/oder erhöhtem Eingriffswinkel >20°, insbesondere zwischen 30° bis 45° aufweisen. In der Regel spielt die Balligkeit der Stirnradverzahnung der Kreisscheiben, auch aufgrund der relativ geringen Dicke, keine entscheidende Rolle. Hierdurch wird eine konstante Drehwinkelübertragung erreicht, wobei sich immer mindestens ein Zahnpaar im Eingriff befindet und eine gleichmäßige Übertragung von Drehwinkeln durch eine konstante Übersetzung erreicht wird. Daneben wird eine Konstante Drehmomentübertragung bereitgestellt, und eine Achsabstandstoleranz erreicht, da eine Evolventenverzahnung im Gegensatz zu anderen Verzahnungsarten in Grenzen und bezüglich Drehwinkelübertragung unempfindlich gegen Veränderungen des Achsabstandes der beiden Zahnräder zueinander ist. Letztlich ist eine derartige Verzahnung einfach herstellbar und kombinierbar, da diese sich zur Herstellung im Wälzfräsverfahren eignet.

In einer vorteilhaften Ausführungsform können die exzentrisch antreibbaren Zahnscheiben zumindest bereichsweise, insbesondere vollständig, aus Metall, vorzugsweise Federstahl, aus Kompositwerkstoffen und/oder aus Hochleistungskunststoffen, wie PEEK, PTFE (Teflon), Stahl, Nylon, bestehen.

Eine variable Nutzbarkeit verschiedener Materialien kann in einer vorteilhaften Ausführungsform genutzt werden, indem die exzentrisch antreibbaren Zahnscheiben entsprechend der Anwendungsform zumindest bereichsweise, insbesondere vollständig, aus Metall, vorzugsweise Federstahl, aus Kompositwerkstoffen und/oder alternativ aus Hochleistungskunststoffen, wie PEEK, PTFE (Teflon), Stahl, Nylon, durch alternative Fertigungstechniken, wie Kunststoff- Spritzgießen, Metallfeinstanzen oder Metallstanzen gefertigt werden können.

Vorteilhaft können die exzentrisch antreibbaren Zahnscheiben durch nicht spanenden Formgebungsherstellverfahren, wie Kunststoff- Spritzgießen, Metallfeinstanzen, Metallstanzen oder ein additives Fertigungsverfahren wie 3D-Druck hergestellt werden.

Dadurch ist es möglich, dass je nach Anwendungs- und Belastungserfordernissen die Materialien und die Herstellungsverfahren zur Herstellung der Getriebeteile anpassungsfähig und auch entsprechend der örtlichen Gegebenheiten kostengünstig herzustellen sind.

In einer vorteilhaften Ausführungsform können auf der Hohlwelle, verschiedene Gleitlager aus Keramik, PTFE und Messing und verschiedene Wälzlager in einer alternativ zur Anwendung unterschiedlichen Form, wie Kugelkäfige, Rillenkugellager Schrägkugellager, Vierpunktlager oder Nadelkränze eingesetzt werden. Insbesondere können vorteilhaft die Lager als Wälzlager ausgeführt sein.

In einer vorteilhaften Ausführungsform kann eine Zahnform der Innenverzahnung des Hohlrades funktions- und formkomplementär zur Zahnform der Zahnflanken der Stirnverzahnung der exzentrisch antreibbaren Zahnscheiben ausgeformt sein. Insoweit ergänzt sich die vorteilhafte Ausführungsform der modifizierten Evolventenverzahnung der Zahnscheiben mit der des Hohlrades.

In einer vorteilhaften Weiterbildung kann das Hohlrad und/oder die Welle, insbesondere Hohlwelle, eine vorbestimmbare Drehmomentelastizität, insbesondere durch Variation von Materialwahl, Materialdicke und geometrischen Strukturen aufweisen. So kann beispielsweise im Hohlrad durch Ausnehmungen oder federnde Einschnitte eine Drehmomentelastizität der Innenverzahnung erreicht werden. Insoweit kann die drehmoment-federelastische Wirkung der Getriebeverspannung im Überlastfall weiter gesteigert werden.

In einer vorteilhaften Weiterbildung kann auf der Abtriebsseite das Hohlrad topfförmig mit einer mittig angeformten Abtriebswelle ausgebildet sein, wobei auf der Außenfläche der am Hohlrad angeformten Abtriebswelle ein Lager angeordnet ist, das die Abtriebswelle mittig in dem Getriebegehäuseteil drehbar lagert, so dass das Hohlrad zumindest im Getriebegehäuseteil frei drehbar gelagert ist. Somit kann das Getriebe entlang einer gemeinsamen Achse für den Antriebs- wie Abtriebsstrang in einer einfachen Konstruktionsweise bereitgestellt werden, wobei die Abtriebsachse in Verlängerung der Antriebsachse ausgelegt werden kann.

In einem nebengeordneten Aspekt wird ein Anwendungsantrieb, insbesondere für eine KFZ-Lenkanwendung oder eine Exoskelettanwendung, vorgeschlagen der einen Antriebsmotor und eine Ausführungsform des vorstehend beschriebenen Multi-Exzentergetriebe kombiniert. Es wird vorgeschlagen, dass der Antriebsmotor die Antriebswelle direkt, d.h. ohne Zwischenschaltung eines weiteren Getriebes antreibt. Hierdurch wird ein ultrakompakter Antrieb mit einem relativ schnelldrehenden, insbesondere leistungsschwachem, Motor mit einem überlastfähigem Höchstuntersetzungsgetriebe gepaart, so dass ein kleiner und leistungsfähiger Antrieb insbesondere mit einer batteriegestützten Antriebsquelle bereitgestellt werden kann.

In einer vorteilhaften Weiterbildung des vorgenannten Anwendungsantriebs kann der Antriebsmotor als Innenläufermotor, insbesondere als DC-Innenläufermotor, ausgeführt sein, wobei das Multi-Exzentergetriebe im Innenzylinderbereich des Innenläufermotors angeordnet sein kann. Dies hat den besonderen Vorteil, dass durch den größeren Radius des Innenläufers gegenüber dem Getriebe eine höhere Antriebskraft an der Antriebsseite des Getriebes aufgrund der günstigen Drehmomentumsetzung anliegen kann. Da eine Durchmesservergrößerung eines Motors eine quadratische Leistungszunahme bewirkt, kann die maximale Leistungsausbeute des Motors erreicht werden. Daneben kann Bauraum im Innenläufer zur Integration des Hochleistungsgetriebes raumsparend genutzt werden, so dass die gesamte Antriebseinheit kaum größer als der Antriebsmotor an sich bei optimierter Leistung und Wirkungsgrad ausgeführt sein kann.

### ZEICHNUNGEN

Weitere Vorteile ergeben sich aus den Figuren und der zugehörigen Zeichnungsbeschreibung. In den Figuren sind Ausführungsbeispiele der Erfindung dargestellt. Die Figuren, die Beschreibung und die Ansprüche enthalten zahlreiche Merkmale in Kombinationen. Der Fachmann wird diese Merkmale zweckmäßigerweise auch einzeln betrachten und zu sinnvollen weiteren Kombinationen zusammenfassen. Es zeigen:
- Fig.1: die Explosionszeichnung eines erfindungsgemäßen Hochleistungsgetriebes, das in der Reihenfolge das Ineinandergreifen der Getriebeteile in ein Hohlrad mit sechs exzentrisch antreibbaren Zahnscheiben, die als Stirnrad- Zahnscheiben ausgebildet sind, Exzenternaben, Gleitlagern, Wälzlagern und Antriebswelle zwischen dem Getriebegehäuse und dem Motorgehäuse zeigt;
- Fig.1.1: Getriebeausschnitt von Fig.1 im montierten Zustand ohne Getriebegehäuse mit drei exzentrisch antreibbare Zahnscheiben und Wälzlagern;
- Fig.2: Vorderansicht von Fig.1 mit sechs zueinander versetzten exzentrisch antreibbaren Zahnscheiben, die auf der Außenfläche einer Hohlwelle angeordnet sind und den Eingriff der Stirnradverzahnung der Zahnscheiben in die Innenverzahnung des Hohlrads erkennen lassen;
- Fig. 3: Vorderansicht von Fig.2 mit in dem inneren Umfang der exzentrisch antreibbaren- Zahnscheiben angeordneten Exzenternaben mit Innenverzahnung, mit Anzeige eines 100°- digen Zahneingriffs in die Innenverzahnung des Hohlrads und der daraus resultierenden radialen Kraftübertragung nach außen;
- Fig.4: Vorderansicht einer exzentrisch antreibbaren Zahnscheibe mit eingebrachten geometrischen Strukturen in der Stirnverzahnung und Durchgangsöffnungen;
- Fig.4.1: vergrößerter Ausschnitt von Fig.4;
- Fig. 5: eine Explosionsdarstellung einer Ausführungsform eines Anwendungsantriebs mit Innenläufer-Antriebsmotor;
- Fig. 6: eine Explosionsdarstellung einer weiteren Ausführungsform eines Anwendungsantriebs mit einem angeflanschten Antriebsmotor;
- Figs 7.1a, 7.1b: Simulationsdarstellung eines Kräftediagramms einer Zahnscheibenverzahnung mit zwei starren und zwei elastischen Zahnscheiben bei 100%-Belastung;
- Figs 7.2a, 7.2b: Simulationsdarstellung eines Kräftediagramms einer Zahnscheibenverzahnung mit zwei starren und zwei elastischen Zahnscheiben bei 300%-Überbelastung;
- Figs 8.1a, 8.1b: Simulationsdarstellung eines Kräftediagramms einer Zahnscheibenverzahnung mit sechs starren und sechs elastischen Zahnscheiben bei 100%-Belastung;
- Figs 8.2a, 8.2b: Simulationsdarstellung eines Kräftediagramms einer Zahnscheibenverzahnung mit sechs starren und sechs elastischen Zahnscheiben bei 300%-Überbelastung;
- Figs. 9a-9c: Schematische Darstellung einer Evolventenverzahnung sowie zwei Ausführungsformen modifizierter Evolventenverzahnungen, die in Ausführungsformen der Erfindung einsetzbar sind;
- Figs. 10a-10c: Vergrößerte Schemadarstellung des Zahneingriffs Zahnscheibe in Hohlrad für eine Evolventenverzahnung im Normal- und Überlastfall sowie für eine Zykloidverzahnung.

In den Figuren sind gleiche oder gleichartige Komponenten mit gleichen Bezugszeichen beziffert.

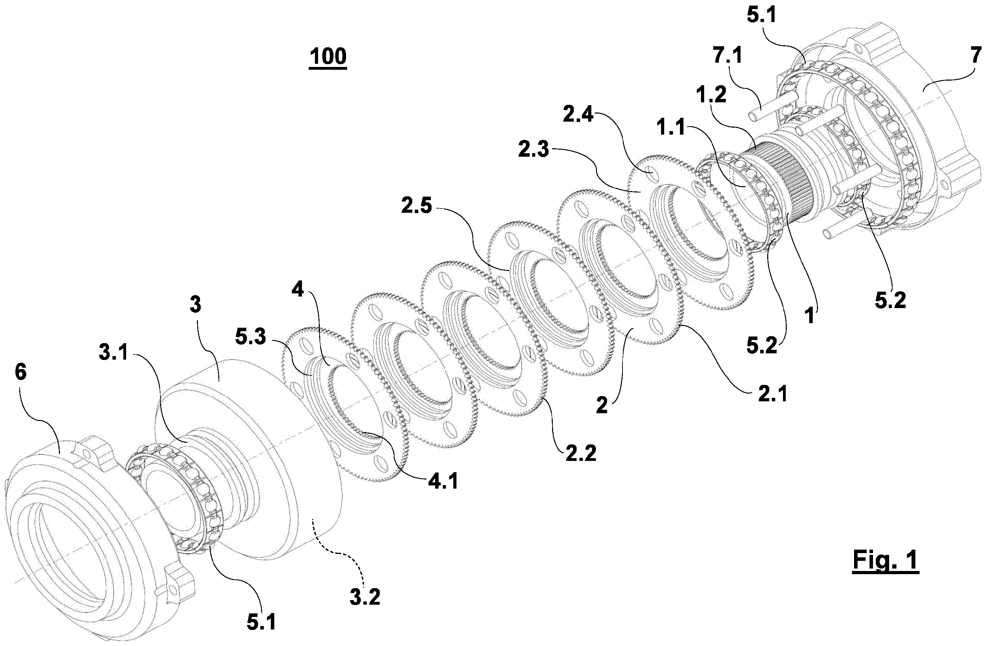

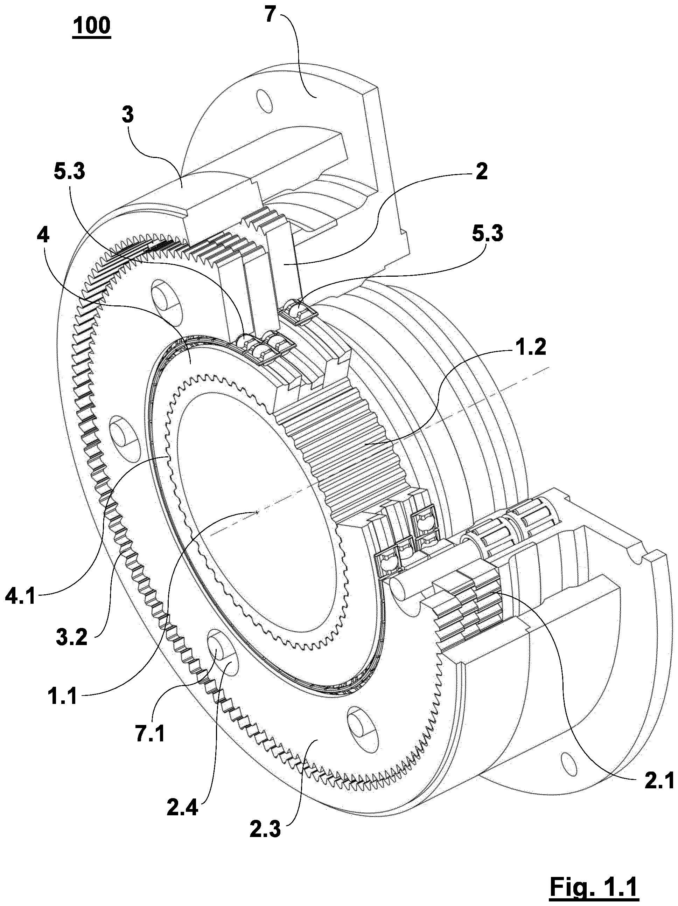

Ein Ausführungsbeispiel, gemäß Fig.1 und Fig.1.1 zeigt eine perspektivische Explosionszeichnung von einem Hochleistungsgetriebe als Multi-Exzentergetriebe mit einer Hohlwelle 1 mit großer innerer Durchlassöffnung 1.1 als Kabeldurchführung und einer Außenverzahnung 1.2, vorzugsweise aus Stahl, auf deren äußerer Umfangsfläche ein Wälzlager 5.1 aus Stahl und auf deren Außenverzahnung 1.2, die als Antriebsrad dient, auf der eine exzentrisch antreibbare Zahnscheibe als Stirnrad- Zahnscheibe 2 vorzugsweise aus Stahl mit einer Stirnverzahnung 2.1 vorzugsweise mit einer EvolventenVerzahnung, entsprechenden Zahnflanken 2.2, Kreisfläche 2.3, Durchgangsöffnungen 2.4 und einem inneren Kreisumfang 2.5 angeordnet ist, in dem eine Exzenternabe 4 mit Innenverzahnung 4.1, vorzugsweise aus Stahl und ein auf der Exzenternabe 4 radial angeordnetes vorzugsweise Keramik-Gleitlager 5 eingesetzt ist, wobei die derart bestückte exzentrisch antreibbaren Zahnscheibe 2 mit der Exzenternabe 4 auf der äußeren Verzahnung 1.2 der Hohlwelle 1 sitzt. Dieser bestückten exzentrisch antreibbaren- Zahnscheibe 2 folgen fünf weitere dieser bestückten exzentrisch antreibbaren Zahnscheiben (2). Die vorzugsweise sechs bestückten Stirnrad-Zahnscheiben 2 werden mit der Innenverzahnung 4.1 der Exzenternaben 4 auf die Außenverzahnung 1.2 der Hohlwelle 1 geschoben und gemäß Fig. 1.1, zusammengeschoben in das Hohlrad 3 eingeführt, wodurch die Stirnverzahnung 2.1 der exzentrisch antreibbaren Zahnscheiben 2 in die Innenverzahnung 3.2 des, vorzugsweise aus Stahl bestehenden, Hohlrades 3 eingreifen. Das so bestückte Hohlrad 3 wird mit seiner außen angeformten hohlen Abtriebswelle 3.1 mit einem darauf angeordneten Wälzlager 5.1 in das beispielsweise aus Aluminiumguss bestehende, Getriebegehäuse 6 eingeführt und drehbar gelagert.

In der Fig. 1 erfolgt ein Antrieb über die zentrale Exzenternabe 4, die mittig angetrieben und abgestützt über zentrische Stützwellen wird. Dabei können Motor und Getriebe hintereinander angeordnet werden, dies erlaubt einen Getriebeaufbau mit großen inneren Freiraum.

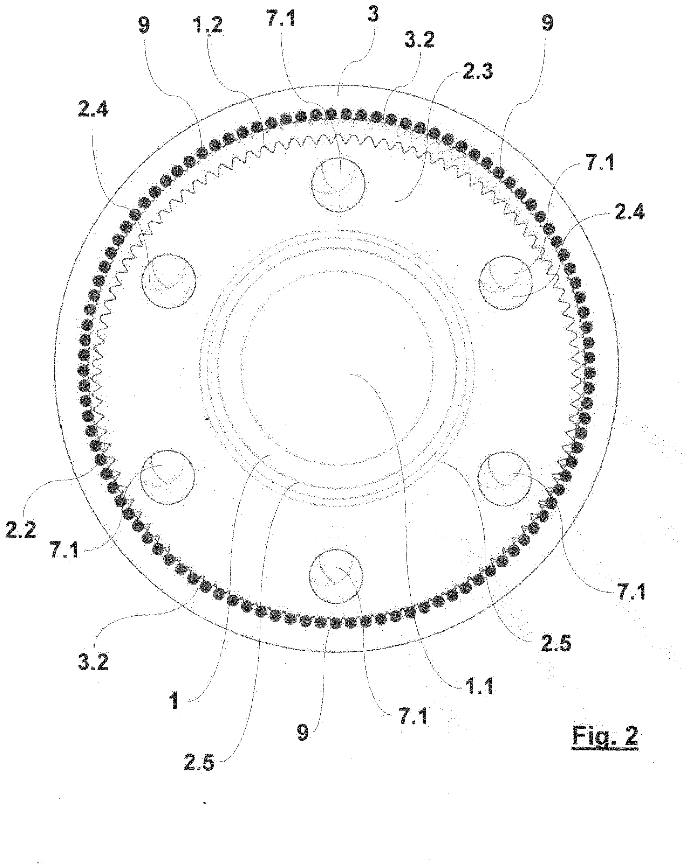

Gemäß Fig.2 ist eine offene Vorderansicht des Getriebes dargestellt, in der die 100-prozentigen Eingriffspunkte 9 der Stirnverzahnung 2.1 der exzentrisch antreibbaren Zahnscheiben 2 in die Innenverzahnung 3.2 des Hohlrads 3 zu erkennen sind.

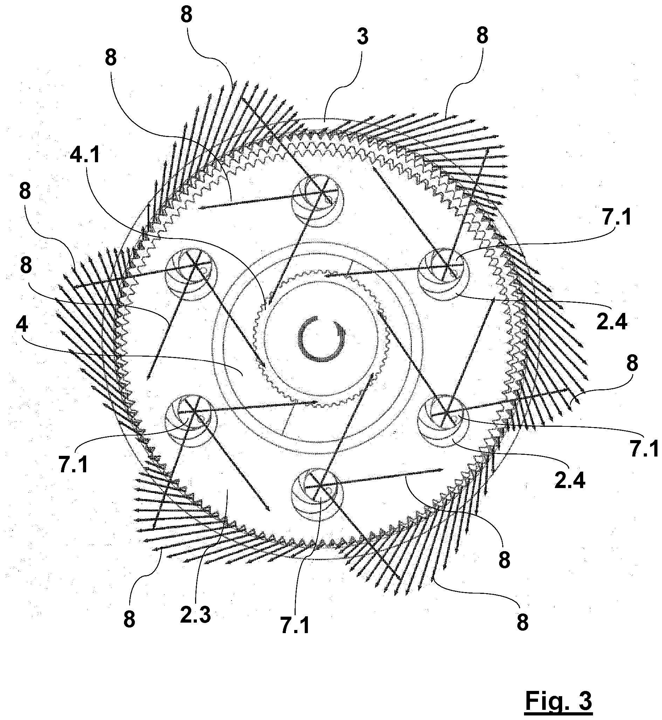

In Fig. 3 ist eine offene Vorderansicht des Getriebes dargestellt, in die der Eingriff der Innenverzahnung 4.1 der Exzenternabe 4 in die Außenverzahnung 1.2 der Hohlwelle 1 und damit in das Antriebsrad zu erkennen ist. Darüber hinaus zeigt Fig.3 die fast geschlossene Verteilung der Kraftvektoren 8. Ein Motorgehäuse 7 ist, gemäß Fig.1.1, stirnseitig mit Drehmomenten- Stützwellen 7.1 ausgestattet, die drehbar angeordnet sind. Das vorzugsweise aus Aluminiumguss bestehende Motorgehäuse 7 wird über einen weiteren Lagerkranz 5.1 mit den in Richtung des Hohlrades 3 ragenden Drehmomenten-Stützwellen 7.1 auf das gegenüberliegende Ende der Hohlwelle 1 aufgeschoben, wobei, gemäß Fig.1.1 die Drehmomenten- Stützwellen 7.1 die Durchgangsöffnungen 2.4 der exzentrisch antreibbaren Zahnscheiben 2 durchdringen und im Hohlrad 3 drehbar gelagert eingeführt sind und dort enden. Auf diese Weise kann, gemäß Fig.2, die exzentrische, oszillierende Drehbewegung der exzentrisch antreibbaren Zahnscheiben 2 stabil auf die Innenverzahnung 3.2 des Hohlrades 3 übertragen werden. Das Hochleistungsgetriebe wird durch die Hohlwelle 1 und deren Außenverzahnung 1.2 über die Stirnrad- Zahnscheiben 2 angetrieben und deren oszillierende Drehbewegung wird über das Hohlrad 3 und dessen Innenverzahnung 3.2 sowie über die außen angeformte Abtriebswelle 3.1 auf eine Anwendung übertragen.

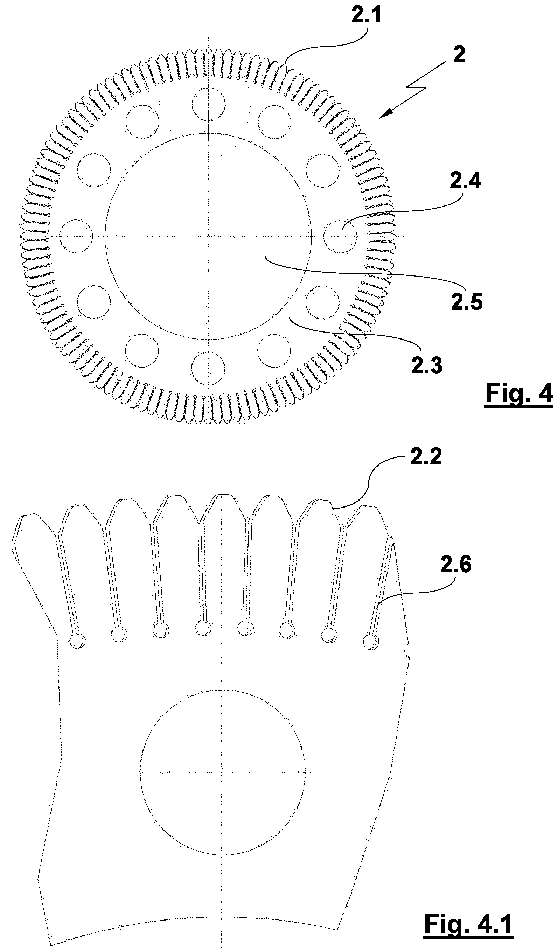

Alternativ kann bedarfsweise gemäß Fig. 4 eine exzentrisch antreibbare Zahnscheibe 2 mit einer Stirnverzahnung 2.1 mit angeordneten geometrischen Strukturen, in diesem Fall vorzugsweise mit Spalten 2.6, eingesetzt werden. Dabei werden die Durchgangsöffnungen 2.4 durch die Zahnmitte der exzentrisch antreibbaren Zahnscheibe 2 vorzugsweise 0,06° zur Mittelachse verdreht., wobei bei wechselnd gegenseitig eingebauten exzentrisch antreibbaren Zahnscheiben 2 sich eine Zahnversatz von Zahn zu Zahn von 0,15mm ergibt. Diese Variante gestattet eine flexible Bewegung der Stirnverzahnung 2.1 an der exzentrisch antreibbaren Zahnscheibe 2 und deren Verspannung mit der Innenverzahnung 3.2 des Hohlrads 3, wodurch auch eine spielfreie Verzahnung hergestellt werden kann.

Der größte Vorteil des Hochleistungsgetriebes besteht bei gleicher Baugröße zu einem Standart- Getriebe darin, dass bei einer exzentrisch antreibbaren Zahnscheiben 2 in voller Stahlausführung ein Vielfaches an Drehmoment übertragen werden kann.

Bei exzentrisch antreibbaren Zahnscheiben 2 in Kunststoffausführung kann annähernd dasselbe Drehmoment übertragen werden-

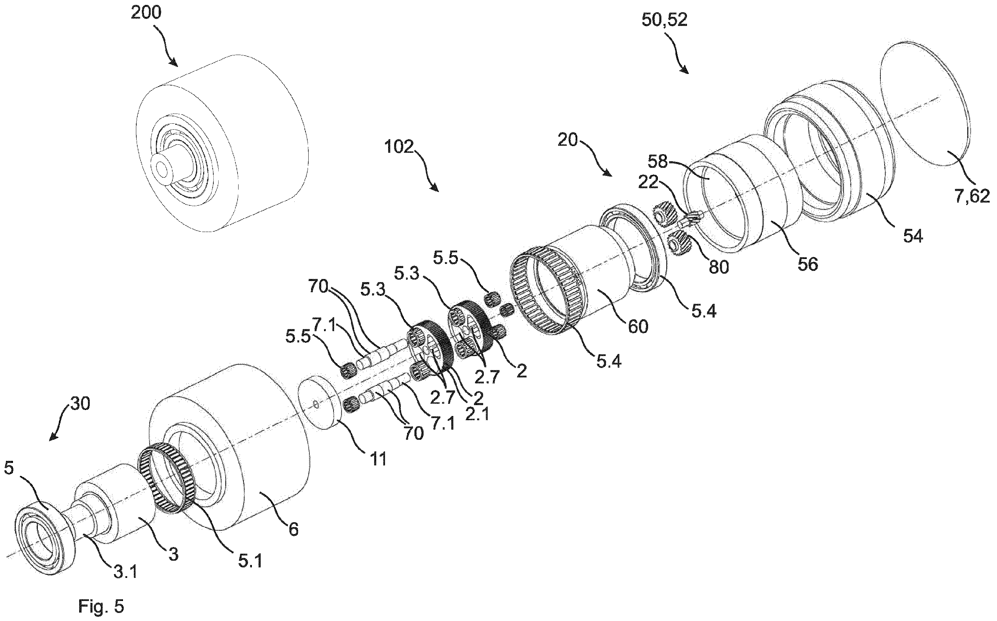

In Fig. 5 ist eine Explosionsdarstellung einer Ausführungsform eines Anwendungsantriebs 200 mit einem Antriebsmotor 50 in Form eines Innenläufermotors 52 dargestellt. Der Innenläufermotor 52 umfasst einen Außenstator 54 und einen Innenläufer 56 und kann beispielsweise als DC-Motor, aber auch als AC-Motor, insbesondere als (mehrphasiger) drehzahlsteuerbarer Synchronmotor ausgeführt sein. Im Innenzylinderbereich 58 kann ein Multi-Exzentergetriebe 102 angeordnet sein. Das Multi-Exzentergetriebe 102 kann in diesem Fall, um eine kompakte Abmessung zu erhalten, durch Exzenter-Stützwellen 7.1 angetrieben werden. Ein rückwärtiges Motorgehäuseteil 7 kann als Motorabschlussplatte 62 ausgeführt sein, an der sowohl der Innenläufer 56 gelagert, als auch die Exzenter-Stützwellen 7.1 gelagert werden können.

Der Innenläufer 56 treibt an der Antriebsseite 20 eine Antriebswelle 22 in Form eines Zahnrades eines Verteilergetriebes 80 an. Das Verteilergetriebe 80 ist drehmechanisch mit den Exzenter-Stützwellen 7.1 gekoppelt und versetzt diese in Drehung. Bereits über das Verteilergetriebe 80 kann eine Drehzahlumsetzung erreicht werden.

Der Innenläufer 56 ist über zwei Lager 5.4, einem Nadel- und einem Kugellager, auf einer Getriebechassis-Hülse 60 gelagert, die das Multi-Exzentergetriebe 102 umfasst und abdeckt.

Die Exzenter-Stützwelle 7.1 sind durch Durchgangsöffnungen 2.4 zweier exzentrisch antreibbaren Zahnscheiben 2 geführt und mittels Lager 5.5 axial endseitig auf der Motorabschlussplatte 62 und auf einer Gegenlagerscheibe 11 gelagert. In den Durchgangsöffnungen 2.4 der Zahnscheiben 2 sind die Exzenter-Stützwellen 7.1 in ihren Exzenterabschnitten 70, die die Exzentrizität der Drehschwingung der Zahnscheiben 2 definieren, mittels Lager 5.3 gelagert. Des Weiteren wiesen die Zahnscheiben 2 eine Stirnverzahnung 2.1 und mehrere Ausnehmungen 2.7 zur Ausbildung einer gewünschten Drehmoment-Elastizität auf.

Ein topfförmiges Hohlrad 3 mit endseitig angeflanschter Abtriebswelle 3.1 und einer nicht sichtbaren Innenverzahnung 3.1 wird über die Stirnverzahnung 2.1 der beiden Zahnscheiben 2 geschoben. Das Hohlrad ist über ein Lager 5.1 in der Getriebechassis-Hülse 60 drehbar gelagert und nimmt die Gegenlagerscheibe 11auf. Die Abtriebswelle 3.1 der Abtriebsseite 30 ist über ein Lager 5 am Getriebegehäuse 6 drehbar gelagert.

Im oberen Bereich ist der Anwendungsantrieb 200 im zusammengebauten Zustand dargestellt und zeigt sein ultrakompaktes Design, wobei das Multi-Exzentergetriebe 102 im Inneren des Innenläufers 56 integriert ist, so dass der gesamte Anwendungsantrieb kaum größer als der Antriebsmotor 50 ist. Je nach Bedarf können mehr als zwei Zahnscheiben eingesetzt werden, wobei die Exzenter-Stützwellen 7.1 entsprechend mehr Exzenterabschnitte 50 aufweist.

Der Anwendungsantrieb 200 umfasst somit mehrere Exzenterwellen 7.1, welche direkt über ein Verteilergetriebe 80 oder auch einzelne miteinander synchronisierte Motoren angetrieben werden kann, die gleichzeitig als Stützwellen 7.1 fungieren, wobei ein mittige Exzenterantrieb entfällt. Die Besonderheit ist dabei, dass das Getriebe 102 im Außendurchmesser so klein gebaut werden kann und deshalb komplett im Inneren des Motors 50 untergebracht werden kann. Wenn nun der Motor 50 die äußere Schale der Einheit bildet, ergibt sich ein weiterer Vorteil: Die Leistung des Motors 50 steigt im Quadrat beim Zuwachs des Motordurchmessers. Beim kompletten Anwendungsantrieb 200 ergibt sich daraus eine extrem kompakte Getriebemotoreneinheit.

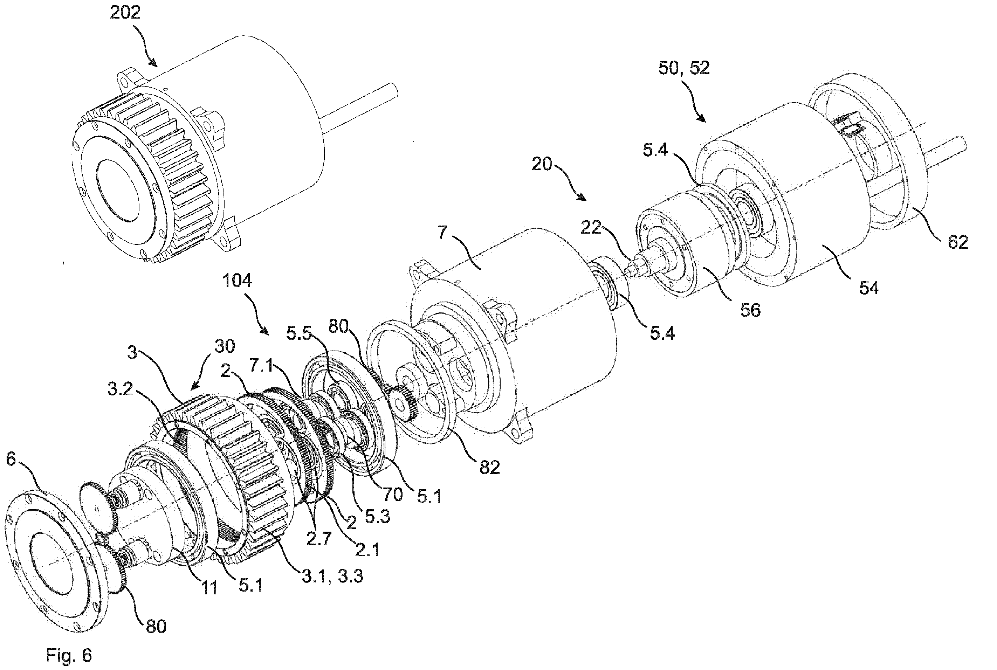

Fig. 6 zeigt eine weitere Explosionsdarstellung einer weiteren Ausführungsform eines Anwendungsantriebs 202 mit einem an ein Multi-Exzentergetriebe 104 angeflanschten Antriebsmotor 50. Grundsätzlich entspricht der Aufbau dem des in Fig. 5 gezeigten Anwendungsantriebs 200. In der oberen linken Bildhälfte ist der Anwendungsantrieb 202 im zusammengebauten Zustand dargestellt.

Im Gegensatz zum Anwendungsantrieb 200 erfolgt der Abtrieb über ein Stirnrad-Außenverzahnung 3.3 des Hohlrades 3 statt einer angeflanschten Abtriebswelle 3.1, also mit einem integriertem Außenzahnrad als Abtrieb.

Der Antriebsmotor 50 ist als Innenläufermotor mit Stator 54 ausgeführt, allerdings ist der Innenläufer 56 nicht als Hohlzylinder wie beim Anwendungsantrieb 200, sondern als Läuferpaket ausgeführt, dass beispielsweise permanentmagnetbestückt oder mit Läuferspulen ausgeführt sein kann. Aus diesem Grund ist der Antriebsmotor 50 an das Multi-Exzentergetriebe 104 an der Antriebsseite 20 über eine Antriebswelle 22 angeflanscht. Die Antriebswelle 22 ist durch ein Rotorlager 5.4 gelagert. Der Antriebsmotor 50 ist rückwärtig mit einer Motorabschlussplatte 60, die den Innenläufer 56 lagert, abgeschlossen. Ein topfförmiges Motorgehäuseteil 7 kapselt den Antriebsmotor 50, diese ist mit der Motorabschlussplatte 62 verschraubt.

An dem Motorgehäuseteil 7 schließt sich das Multi-Exzentergetriebe 104, gekoppelt über eine Getriebe-Anschlussdichtung 82 an, die schmiermitteldicht ausgeführt ist. Das Multi-Exzentergetriebe 104 ist prinzipiell vergleichbar mit dem Multi-Exzentergetriebe 102 des Anwendungsantriebs 200 aufgebaut. Über ein Antriebs-Verteilergetriebe 80 wird die Drehbewegung der Antriebswelle 22 auf die Exzenter-Stützwellen 7.1 übertragen. Diese sind axial endseitig über Lager 5.5 in dem Motorgehäuseteil 7 und einer Gegenlagerscheibe 11 der Exzenter-Stützwellen 7.1 gelagert. An der Gegenlagerscheibe 11 sorgt ein weiteres Verteilergetriebe 80 mit einer drehmechanischen Kopplung der beidne Exzenter-Stützwellen 7.1 um einen perfekt synchronen Drehlauf bereitzustellen. Die Gegenlagerscheibe 11 ist über ein Lager 5.1 in Hohlrad 11 gelagert und mit Schrauben am Motorgehäuseteil 7 drehfest befestigt. Die Exzenter-Stützwellen 7.1 durchdringen die mit Lagern 5.5 bestückten Durchgangsöffnungen 2.4 der beiden Zahnscheiben 2. Je nach Bedarf können mehr, insbesondere sechs Zahnscheiben 2 vorgesehen sein, die einen 100% Zahneingriff in die Innenverzahnung 3.2 des Hohlrades 3 bereitstellen können. Dabei sind Exzenterabschnitte 70 der Exzenter-Stützwellen 7.1 den Durchgangsöffnungen 2.4 zugeordnet, die die exzentrische Drehschwingung bewirken. Die Zahnscheiben 2 weisen zur Erhöhung der Drehmoment-Elastizität Ausnehmungen 2.7 sowie eine Stirnverzahnung 2.1 auf. Die Stirnverzahnung 2.1 ist eine modifizierte Evolventenverzahnung mit veränderten Kopf- und Fußrücknahmen. Diese greift in eine nicht dargestellte Innenverzahnung 3.2 des Hohlrades 3 ein und bewirkt eine Getriebeumsetzung zwischen Zahnscheibe 2 und Hohlrad 3. Das Hohlrad 3 ist gegenüber dem Motorgehäuseteil 7 bzw. der, mit dieser drehfest verbundenen, Gegenlagerscheibe 11 durch jeweils ein Lager 5.1 gelagert. Das axial endseitige, ringförmige Getriebegehäuseteil 6 ist mit dem Hohlrad 3 verschraubt und verschließt das Multi-Exzendergetriebe 104.

Die Vorteile des Anwendungsantriebs 104 sind identisch mit denen des Anwendungsantriebs 102, zudem ist die Abtriebswelle 3.1 des Getriebes 104 als Abtriebszahnrad 3.3 ausgebildet.

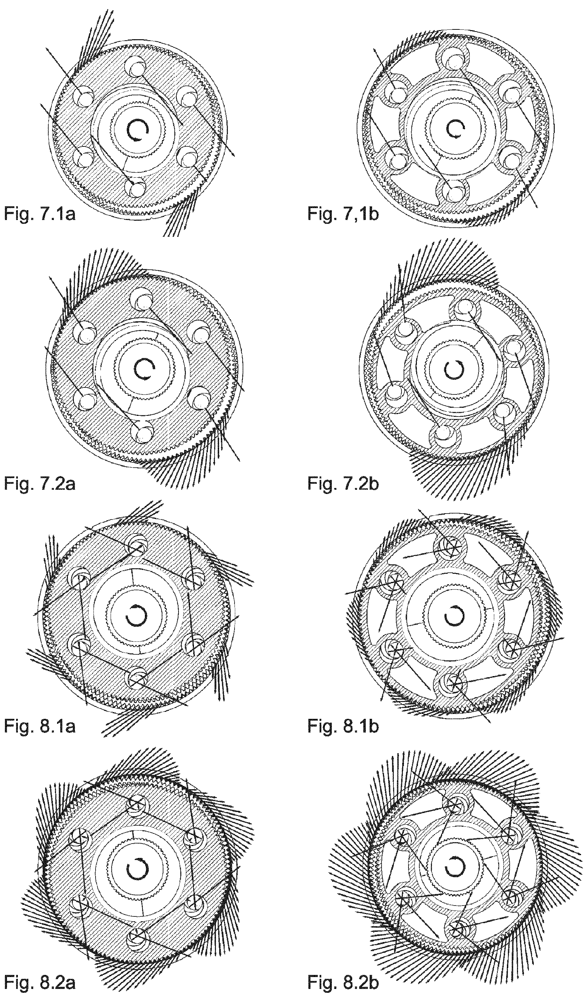

Das Darstellungskonvolut der Figs. 7 und 8 stellt zum einen in Simulationsdarstellungen die mittels Kräftevektoren dargestellten Kräftewirkung auf die Zähne der Stirnverzahnung 2.1 der Kreisscheiben verschiedener Multi-Exzentergetriebe beim Eingriff in ein (nicht dargestelltes) Hohlrad 3 dar. Die Länge der Kraftvektoren entspricht der Krafteinwirkung auf den jeweiligen Zahn der Stirnverzahnung 2.1.

In Fig. 7 ist ein Multi-Exzentergetriebe mit zwei exzentrisch antreibbaren Zahnscheiben 2 dargestellt.

Dabei zeigen Fig. 7a eine Kraftbelastung mit 100% der Nennbelastung Fig. 7b eine Kraftbelastung mit 300%. Die Fig. 7.1a und Fig. 7.2a zeigen starr ausgeführte Zahnscheiben ohne Ausnehmungen aus einem harten Material wie Gusseisen, Fig. 7.1b und Fig. 7.2b zeigen relativ drehmoment-elastische Zahnscheiben, die z.B. aus Kunststoff mit größeren Ausnehmungen 2.7 ausgebildet sind. In den untenstehenden Tabellen sind die wesentlichen Simulationsergebnisse angegeben :

| Fig. 7.1a | | Fig. 7.1b | |
|---|---|---|---|
| 2-Zahnscheiben, starres geom. Zahnrad | | 2-Zahnscheiben, elastisches geom. Zahnrad | |
| Zahneingriff | Z14 / 12 % | Zahneingriff | Z36 / 30 % |
| Belastung 100 % | 100 % | Belastung | 100 % |
| Wirkungsgrad | ∼ 96 % | Wirkungsgrad | ∼ 88 % |
| Verdrehsteifigkeit Winkel | ca. 5 arcmin | Verdrehsteifigkeit Winkel | ca. 8 arcmin |
| Fläche | 100 % | Fläche | 50% |

| Fig. 7.2a | | Fig. 7.2b | |
|---|---|---|---|
| 2-Zahnscheiben, starres geom. Zahnrad | | 2-Zahnscheiben, elastisches geom. Zahnrad | |
| Zahneingriff | Z40 / 33 % | Zahneingriff | Z50 / 42 % |
| Belastung | 300 % | Belastung | 300 % |
| Wirkungsgrad | ∼ 75 % | Wirkungsgrad | ∼ 65 % |
| Verdrehsteifigkeit Winkel | ca. 10 arcmin | Verdrehsteifigkeit Winkel | ca. 15 arcmin |
| Fläche | 100 % | Fläche | 50% |

Deutlich erkennbar ist, dass die starren Zahnscheiben zwar einen besseren Wirkungsgrad aufweisen, allerdings sowohl bei Nenn- als auch bei Überlast deutlich höhere Kräftebelastungen auf relativ wenige Zähne aufweisen, die zum Bruch der Zähne, zumindest zur frühen Materialermüdung und erhöhtem Verschleiß als bei elastischen Zahnscheiben führt. Daneben weisen die elastische Zahnform der Stirnrädereinen erhöhten Zahneingriff und eine verbesserte Verdrehsteifigkeit bei geringerem Gewicht und erhöhter Langlebigkeit aus.

In Fig. 8 ist ein Multi-Exzentergetriebe mit sechs exzentrisch antreibbaren Zahnscheiben 2 dargestellt.

Dabei zeigen Fig. 8a eine Kraftbelastung mit 100% der Nennbelastung Fig. 8b eine Kraftbelastung mit 300%. Die Fig. 8.1a und Fig. 8.2a zeigen starr ausgeführte Zahnscheiben ohne Ausnehmungen aus einem harten Material wie Gusseisen, Fig. 8.1b und Fig. 8.2b zeigen relativ drehmoment-elastische Zahnscheiben, die z.B. aus Kunststoff mit größeren Ausnehmungen 2.7 ausgebildet sind. In den untenstehenden Tabellen sind die wesentlichen Simulationsergebnisse angegeben:

| Fig. 8.1a | | Fig. 8.1b | |
|---|---|---|---|
| 6-Zahnscheiben, starres geom. Zahnrad | | 6-Zahnscheiben, elastisches geom. Zahnrad | |
| Zahneingriff | Z42 / 36 % | Zahneingriff | Z90 / 75 % |
| Belastung | 100 % | Belastung | 100 % |
| Wirkungsgrad | ∼ 90 % | Wirkungsgrad | ∼ 82 % |
| Verdrehsteifigkeit Winkel | ca. 5 arcmin | Verdrehsteifigkeit Winkel | ca. 8 arcmin |
| Fläche | 100 % | Fläche | 50% |

| Fig. 8.2a | | Fig. 8.2b | |
|---|---|---|---|
| 6-Zahnscheiben, starres geom. Zahnrad | | 6-Zahnscheiben, elastisches geom. Zahnrad | |
| Zahneingriff | Z108 / 90 % | Zahneingriff | Z168 / 140 % |
| Belastung | 300 % | Belastung | 300 % |
| Wirkungsgrad | ∼ 70 % | Wirkungsgrad | ∼ 60 % |
| Verdrehsteifigkeit Winkel | ca. 10 arcmin | Verdrehsteifigkeit Winkel | ca. 15 arcmin |
| Fläche | 100 % | Fläche | 50% |

Das Ergebnis der Simulation der Kräfteverhältnisse bei sechs Zahnscheiben bestätigt das bereits bei zwei Zahnscheiben ermittelte Ergebnis: Die starren Zahnscheiben weisen zwar einen besseren Wirkungsgrad auf, zeigen allerdings sowohl bei Nenn- als auch bei Überlast deutlich höhere Kräftebelastungen an relativ wenigen Zähnen auf, die zum Bruch der Zähne, zumindest zur frühen Materialermüdung und erhöhtem Verschleiß als bei elastischen Zahnscheiben führt. Daneben weisen die elastische Zahnform der Stirnräder einen erhöhten Zahneingriff und eine verbesserte Verdrehsteifigkeit bei geringerem Gewicht und erhöhter Langlebigkeit aus. Es ist des Weiteren deutlich, dass sechs elastische Zahnscheiben im Überlastfall einen 140%-Eingriff in die Hohlradverzahnung bereitstellen können.

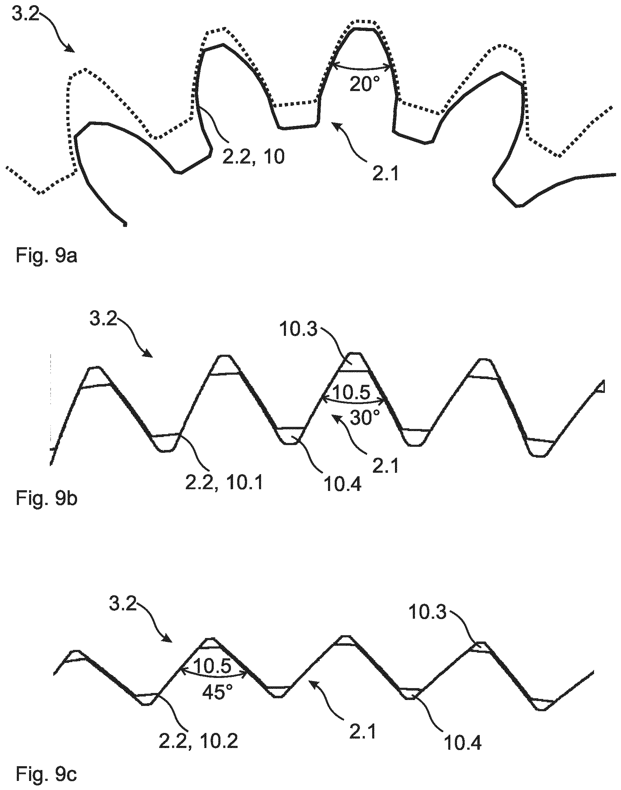

Die Figs. 9a-9c zeigen schematische Darstellungen einer Evolventenverzahnung sowie zwei Ausführungsformen modifizierter Evolventenverzahnungen, die beispielsweise in Ausführungsformen der Erfindung einsetzbar sind.

In Fig. 9a ist eine gewöhnliche Evolventenzahnform 10 zwischen einer Strinverzahnung 2.1 einer Zahnscheibe 2 und einer Innenverzahnung 3.2 eines Hohlrades 3 dargestellt. Der Eingriffswinkel mit 20° sowie die Kopf- und Fußgestaltung sind derart, dass im Volleingriff die Zahnflanke 2.2 der Stirnverzahnung 2.1 vollständig in die Zahnaufnahme der Innenverzahnung 3.2 eintaucht und der Zahn die Zahnaufnahme nicht vollständig ausfüllt.

Die Figs. 9b und 9c zeigen modifizierte Evolventenzahnformen, die vorteilhaft in erfindungsgemäßen Ausführungsformen eingesetzt werden können. Diese zeigen gegenüger der gewöhnlichen Evolventenzahnform 10 der Fig. 9a erhöhte Eingriffswinkel 10.5 mit 30° bzw. 45° sowie vergrößerte Kopfrücknahmen 10.3 und verkleinerte Fußrücknahmen 10.4, die eine verbesserte Verzahnungseigenschaft im Überlastfall, insbesondere bei einem drehmoment-elastischen Verhalten der Zahnscheibe 2 bzw. des Hohlrads 3 ermöglicht.

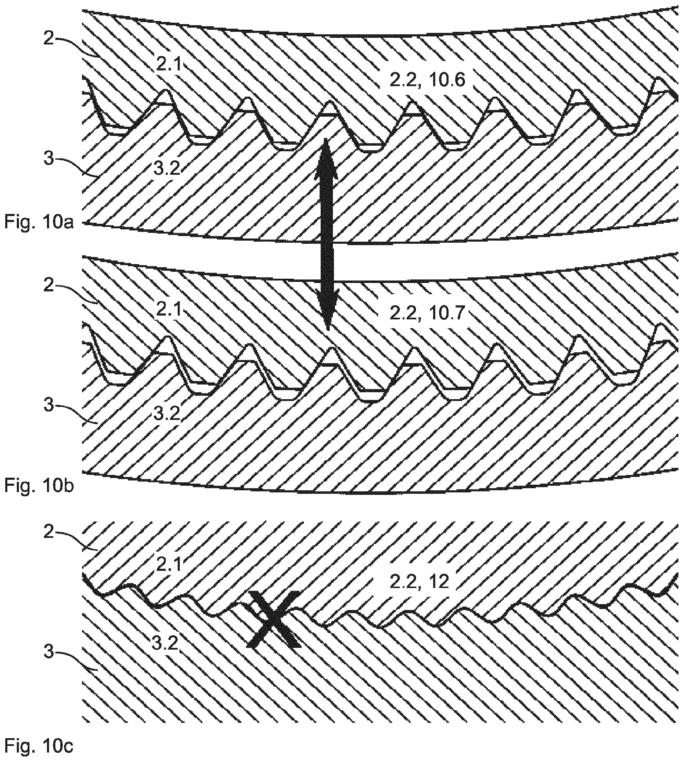

Schließlich zeigen die Figs. 10a-10cvergrößerte Schemadarstellung des Zahneingriffs einer Zahnscheibe 2 in ein Hohlrad 3 für eine Evolventenverzahnung im Normallastfall 10.6 und in einem Überlastfall 10.7 sowie für eine modifizierte Zykloidverzahnung, wie in den Figs. 9b, 9c dargestellt.

Die Fig. 10a zeigt die modifizierte Evolventen-Zahnform der Stirnverzahnung 2.1 der exzentrisch antreibbare Zahnscheibe 2 mit der Innenverzahnung 3.2 des Hohlrads 2 in einem Normallastfall. Dadurch, dass die modifizierte Evolventenverzahnung ein Kopfsowie Fußspiel aufweist und die Kraftübertragung annähernd quer zum Zahn auftritt ist es möglich Elastizitäten in die Verzahnungsteile mit aufzunehmen. Es ist gut erkennbar, dass die Zahnflanken 2.2 im Normallastfall symmetrisch gleichartig in den Zahnaufnahmen der Innenverzahnung 3.2 aufgenommen sind. Im Überlastfall der Fig. 10b sind die Zahnflanken 2.2 nur teilweise in den Zahnaufnahmen aufgenommen, wodurch eine Drehmomentelastizität der Zahnscheibe 2 die Eingriffswirkung unterstützt wird.

Im Gegensatz dazu zeigt die in Fig. 10c dargestellte, steife Zykoloidverzahnung 12 keinerlei Toleranz für einen Überlastfall, der entweder zur Beschädigung oder zum Verkeilen der Zykloidverzahnung führt.

### Bezugszeichenliste

- 1: Hohlwelle, drehfest mit Antriebswelle verbunden
- 1.1: Durchlassöffnung der Hohlwelle
- 1.2: Außenverzahnung der Hohlwelle
- 2: exzentrisch antreibbare Zahnscheibe
- 2.1: Stirnverzahnung der Exzenter -Zahnscheibe
- 2.2: Zahnflanke der Stirnverzahnung der exzentrisch antreibbare Zahnscheibe
- 2.3: Kreisscheibe der Exzenter -Zahnscheibe
- 2.4: Durchgangsöffnung in Kreisscheibe der exzentrisch antreibbare Zahnscheibe
- 2.5: Nabenaufnahme der Exzenternabe
- 2.6: Spalte in Zähne der Stirnverzahnung der exzentrisch antreibbare Zahnscheibe
- 2.7: Ausnehmung in Kreisscheibe der exzentrisch antreibbare Zahnscheibe
- 3: Hohlrad
- 3.1: Abtriebswelle des Hohlrads
- 3.2: Innenverzahnung des Hohlrads
- 3.3: Außenverzahnung des Hohlrads
- 4: Exzenternabe
- 4.1: Innenverzahnung der Exzenternabe
- 5: Lager
- 5.1: Lager des Hohlrads
- 5.2: Lager der Hohlwelle
- 5.3: Lager in Nabenaufnahme zwischen exzentrisch antreibbare Zahnscheibe und Exzenternabe bzw. Exzenterstützwelle
- 5.4: Rotorlager des Innenrotors
- 5.5: Lager der Exzenterstützwelle
- 6: Getriebegehäusteil
- 7: Motorgehäuseteil
- 7.1: Exzenter-Stützwelle
- 8: Kraftvektor
- 9: Eingriffspunkte der Innenverzahnung des Hohlrads in die Stirnverzahnung der exzentrisch antreibbare Zahnscheiben

- 10: Evolventenzahnform einer Stirnverzahnung einer Zahnscheibe mit einer Innenverzahnung eines Hohlrads
- 10.1, 10.2: modifizierte Evolventen-Zahnform der Stirnverzahnung der exzentrisch antreibbaren Zahnscheibe mit der Innenverzahnung des Hohlrads mit vergrößertem Eingriffswinkel
- 10.3: vergrößerte Kopfrücknahme
- 10.4: verkleinerte Fußrücknahme
- 10.5: vergrößerter Eingriffswinkel
- 10.6, 10.7: modifizierte Evolventen-Zahnform der Stirnverzahnung der exzentrisch antreibbare Zahnscheibe mit der Innenverzahnung des Hohlrads bei Normalbelastung und bei Überlast
- 11: Gegenlagerscheibe der Exzenter-Stützwellen
- 12: Zykloidverzahnung

- 20: Antriebsseite
- 22: Antriebswelle
- 30: Abtriebsseite

- 50: Antriebsmotor
- 52: Innenläufermotor
- 54: Außenstator
- 56: Innenläufer
- 58: Innenzylinderbereich des Innenläufers
- 60: Getriebechassis-Hülse
- 62: Motorabschlussplatte

- 70: Exzenterabschnitt der Exzenter-Stützwelle

- 80: Antriebs-Verteilergetriebe
- 82: Getriebe-Anschlussdichtring

- 100: Multi-Exzentergetriebe mit Hohlwellenantrieb
- 102: Multi-Exzentergetriebe mit Stützwellenantrieb
- 104: Multi-Exzentergetriebe mit Stützwellenantrieb

- 200: Anwendungsantrieb mit Innenläufer-Motor
- 202: Anwendungsantrieb mit angeflanschtem Motor und Außenzahnrad-Abtrieb

## Patentansprüche

1. Multi-Exzentergetriebe (100, 102, 104) mit einem, eine Antriebswelle (22) lagerndes Motorgehäuseteil (7) einer Antriebsseite (20) und einem, eine Abtriebswelle (3.1) lagerndes Getriebegehäuseteil (6) einer Abtriebsseite (30), die miteinander verbunden sind und ein Gehäuse des Multi-Exzentergetriebes (100, 102, 104) bereitstellen, aufweisend
an der Antriebsseite (20) eine Aufreihung von zumindest zwei oder mehr, bevorzugt sechs, entlang einer zentralen Achse angeordnete, am äußeren Umfang eine Stirnverzahnung (2.1) aufweisende exzentrisch antreibbare Zahnscheiben (2), und die mit der Antriebswelle (22) zur Erzeugung einer exzentrischen Drehschwingung gekoppelt sind, und
an der Abtriebsseite (30) ein innenverzahntes Hohlrad (3), wobei das Hohlrad (3) am äußeren Umfang der Aufreihung der exzentrisch antreibbaren Zahnscheiben (2) an dem Getriebegehäuseteil (6) und/oder an dem Motorgehäuseteil (7) durch ein Lager (5.1) drehbar gelagert ist, und mit der Abtriebswelle (3.1) drehfest verbunden ist, und eine Innenverzahnung (3.2) aufweist, in der die Stirnverzahnung (2.1) jeder exzentrisch antreibbaren Zahnscheiben (2) bereichsweise eingreift,
wobei Kreisflächen (2.3) der exzentrisch antreibbaren Zahnscheiben (2) zumindest zwei, umfangsmäßig um einen Mittelpunkt der Kreisflächen (2.3) gleichverteilt angeordnete Durchgangsöffnungen (2.4) umfassen, so dass die Durchgangsöffnungen (2.4) der Aufreihung der exzentrisch antreibbaren Zahnscheiben (3) von Exzenter-Stützwellen (7.1) durchsetzt sind, wobei die Exzenter-Stützwellen (7.1) in einer inneren Stirnfläche des Motorgehäuses (7), vorzugsweise drehbar, gelagert sind, und die exzentrisch antreibbaren Zahnscheiben (2) drehschwingbar lagern,
**dadurch gekennzeichnet, dass**
die Stirnverzahnung (2.1) Zahnflanken (2.2) entlang eines Umfangs der Kreisfläche (2.3) der jeweiligen exzentrisch antreibbaren Zahnscheibe (2) aufweisen, wobei die Zahnflanken (2.2) eine modifizierte Evolventenverzahnung aufweisen,
und dass die Kreisflächen (2.3) der exzentrisch antreibbaren Zahnscheiben (2) eine vorbestimmbare Drehmomentelastizität, insbesondere durch Variation von Materialwahl, Materialdicke und/oder geometrischen Strukturen aufweisen,
und dass die Aufreihung der exzentrisch antreibbaren Zahnscheiben (2) derart axial benachbart zueinander erfolgt, dass jeweils benachbarte exzentrisch antreibbare Zahnscheiben (2) einen umfangsmäßig gleichverteilt versetzten minimalen Exzenterversatz, insbesondere sechs exzentrisch antreibbare Zahnscheiben (2) ein um jeweils 60° versetzten Exzenterversatz, aufweist,
so dass durch eine auf der Antriebsseite (20) erzeugte oszillierende Drehschwingung der Aufreihung der exzentrisch antreibbaren Zahnscheiben (2) eine Spielfreiheit des Multi-Exzentergetriebes (100, 102, 104) und eine Überlastfähigkeit mit einem maximierten Zahneingriff, insbesondere einen 100-prozentigen Zahneingriff, bei minimierter Zahnkraft der Stirnverzahnung (2.1) der exzentrisch antreibbaren Zahnscheiben (2) in die Innenverzahnung (3.2) des Hohlrads (3) bereitgestellt wird.

2. Multi-Exzentergetriebe (100, 102, 104) nach Anspruch 1, **dadurch gekennzeichnet, dass** auf der Antriebsseite (20) als Antriebsachse (22) eine, die Aufreihung der exzentrisch antreibbaren Zahnscheiben (2) tragende, Welle, insbesondere Hohlwelle (1), mit einem Innendurchmesser (1.1), und vorzugsweise einer Außenverzahnung (1.2), umfasst ist, wobei die Welle, insbesondere Hohlwelle (1), an einem Motorgehäuseteil-seitigem axialen Ende über ein Lager (5.2) in dem Motorgehäuseteil (7) drehbar lagert, und vorzugsweise an einem Getriebegehäuseteil-seitigen axialen Ende über ein Lager (5.2) die Aufreihung der exzentrisch antreibbare Zahnscheiben (2) auf der Welle, insbesondere Hohlwelle (1), abschließt und in einer Hohlaufnahme einer Abtriebswelle (3.1) des Hohlrades (3) drehbar lagert.

3. Multi-Exzentergetriebe (100, 102, 104) nach Anspruch 2, **dadurch gekennzeichnet, dass** jede exzentrisch antreibbare Zahnscheibe (2) einen kreisförmigen Umfang und eine zentrische innere Nabenaufnahme (2.5) aufweist, in der über ein Lager (5.3) eine Exzenternabe (4) frei drehbar in der exzentrisch antreibbaren Zahnscheibe (2) angeordnet ist, wobei vorzugsweise die Exzenternabe (4) ein radial innenliegende Innenverzahnung (4.1) aufweist, die in eine Außenverzahnung (1.2) der Welle, insbesondere Hohlwelle (1), eingreift, so dass eine Drehung der Welle, insbesondere Hohlwelle (1), eine Drehung der Exzenternabe (4) bewirkt, die wiederum eine exzentrische Drehschwingung der exzentrisch antreibbaren Zahnscheibe (2) bewirkt.

4. Multi-Exzentergetriebe (100, 102, 104) nach einem der vorhergehenden Ansprüche, **dadurch gekennzeichnet, dass** auf der Antriebsseite (20) als Antriebsachse (22) oder als zusätzliche Antriebsachse die Exzenter-Stützwellen (7.1) jeweiligen exzentrisch antreibbaren Zahnscheiben (2) zugeordnete Exzenterabschnitte (70) aufweisen und über ein Antriebs-Verteilergetriebe (80) durch die Antriebswelle (22) antreibbar sind, um eine exzentrische Drehschwingung der exzentrisch antreibbaren Zahnscheiben (2) zu bewirken.

5. Multi-Exzentergetriebe (100, 102, 104) nach einem der vorhergehenden Ansprüche, **dadurch gekennzeichnet, dass** eine Drehmomentelastizität der Exzenter-Zahnscheiben (2) durch Bereitstellung geometrischer Strukturen, wie Ausnehmungen, Vertiefungen, Einschnitte in die Kreisflächen (2.3) und/oder Spalte (2.6) zwischen den Zähnen der Stirnverzahnung (2.1), erhöht ist.

6. Multi-Exzentergetriebe (100, 102, 104) nach einem der vorhergehenden Ansprüche, **dadurch gekennzeichnet, dass** die Zähne der Stirnverzahnung (2.1) der winkelversetzten exzentrisch antreibbaren Zahnscheiben (2) zur Innenverzahnung (3.2) des Hohlrades (3) gegenseitig verspannt sind, um die Spielfreiheit des Multi-Exzentergetriebe (100, 102, 104) bereitzustellen.

7. Multi-Exzentergetriebe (100, 102, 104) nach einem der vorhergehenden Ansprüche, **dadurch gekennzeichnet, dass** die Stirnverzahnung (2.1) der Zahnflanken (2.2) eine vordefinierbare Zahnform (10, 10.1, 10.2, 10.6, 10.7) zur verbesserten Drehmomentübertragung der Drehschwingung mit einer modifizierten Evolvente mit vergrößertem Eingriffswinkel, vergrößerter Kopfrücknahme (10.3), verkleinerter Fußrücknahme (10.4) und/oder erhöhtem Eingriffswinkel >20° (10.5), insbesondere zwischen 30° bis 45° aufweist.

8. Multi-Exzentergetriebe (100, 102, 104) nach einem der vorhergehenden Ansprüche, **dadurch gekennzeichnet, dass** die exzentrisch antreibbaren Zahnscheiben (2) zumindest bereichsweise, insbesondere vollständig, aus Metall, vorzugsweise Federstahl, aus Kompositwerkstoffen und/oder aus Hochleistungskunststoffen, wie PEEK, PTFE (Teflon), Stahl, Nylon, bestehen.

9. Multi-Exzentergetriebe (100, 102, 104) nach einem der vorhergehenden Ansprüche, **dadurch gekennzeichnet, dass** die exzentrisch antreibbaren Zahnscheiben (2) durch nicht spanenden Formgebungsherstellverfahren, wie Kunststoff- Spritzgießen, Metallfeinstanzen, Metallstanzen oder ein additives Fertigungsverfahren wie 3D-Druck hergestellt sind.

10. Multi-Exzentergetriebe (100, 102, 104) nach einem der vorhergehenden Ansprüche, **dadurch gekennzeichnet, dass** die Lager (5,1, 5.2, 5.3, 5.4) als Wälzlager, insbesondere in Form von Kugelkäfiglager, Rillenkugellager Schrägkugellager, Vierpunktlager oder Nadelkranzlager bereitgestellt sind, wobei bevorzugt die Lager (5,1, 5.2, 5.3, 5.4) aus Keramik, PTFE und/oder Messing ausgeführt sind.

11. Multi-Exzentergetriebe (100, 102, 104) nach einem der vorhergehenden Ansprüche, **dadurch gekennzeichnet, dass** eine Zahnform der Innenverzahnung (3.2) des Hohlrades (3) funktions- und formkomplementär zur Zahnform (10, 10.1, 10.2, 10.6, 10.7) der Zahnflanken (2.2) der Stirnverzahnung (2.1) der exzentrisch antreibbaren Zahnscheiben (2) ausgeformt ist.

12. Multi-Exzentergetriebe (100, 102, 104) nach einem der vorhergehenden Ansprüche, **dadurch gekennzeichnet, dass** das Hohlrad (3) und/oder die Welle, insbesondere Hohlwelle (1), eine vorbestimmbare Drehmomentelastizität, insbesondere durch Variation von Materialwahl, Materialdicke und geometrischen Strukturen aufweist.

13. Multi-Exzentergetriebe (100, 102, 104) nach einem der vorhergehenden Ansprüche, **dadurch gekennzeichnet, dass** auf der Abtriebsseite (30) das Hohlrad (3) topfförmig mit einer mittig angeformten Abtriebswelle (3.1) ausgebildet ist, wobei auf der Außenfläche der am Hohlrad (3) angeformten Abtriebswelle (3.1) ein Lager (5.1) angeordnet ist, das die Abtriebswelle (3.1) mittig in dem Getriebegehäuseteil (6) drehbar lagert, so dass das Hohlrad (3) zumindest im Getriebegehäuseteil (6) frei drehbar gelagert ist.

14. Anwendungsantrieb (200, 202), insbesondere für eine KFZ-Lenkanwendung oder eine Exoskelettanwendung, umfassend einen Antriebsmotor (50) und ein Multi-Exzentergetriebe (100, 102, 104) nach einem der vorhergehenden Ansprüche, **dadurch gekennzeichnet, dass** der Antriebsmotor (50) die Antriebswelle (22) direkt antreibt.

15. Anwendungsantrieb (200, 202) nach Anspruch 14, **dadurch gekennzeichnet, dass** der Antriebsmotor (50) als Innenläufermotor (52) ausgeführt, ist, wobei das Multi-Exzentergetriebe (100, 102, 104) im Innenzylinderbereich (58) des Innenläufermotors (52) angeordnet ist.
